(19) Europäisches Patentamt

European Patent Office

Office européen des brevets

(11) **EP 1 300 652 B1**

(12) **EUROPÄISCHE PATENTSCHRIFT**

(45) Veröffentlichungstag und Bekanntmachung des Hinweises auf die Patenterteilung:
**08.01.2014 Patentblatt 2014/02**

(51) Int Cl.:
***G01C 21/30*** *(2006.01)*

(21) Anmeldenummer: **02022033.1**

(22) Anmeldetag: **01.10.2002**

(54) **Verfahren und Anordnung zur Ermittlung eines Kartenfahrwegs in einer Karte, welcher einem tatsächlich zurückgelegten Fahrweg entspricht**

Method and arrangement for determining the trajectory on a map which corresponds to the trajectory actually travelled by a mobile system

Procédé et arrangement pour déterminer la trajectoire sur un plan qui correspond à la trajectoire effectivement parcouru par un système mobile

(84) Benannte Vertragsstaaten:
**DE FR GB**

(30) Priorität: **05.10.2001 DE 10149283**

(43) Veröffentlichungstag der Anmeldung:
**09.04.2003 Patentblatt 2003/15**

(73) Patentinhaber: **Continental Automotive GmbH 30165 Hannover (DE)**

(72) Erfinder:
• **Leimbach, Juergen**
  **93055 Regensburg (DE)**
• **Lenz, Henning, Dr.**
  **80798 München (DE)**
• **Mosis, Torsten**
  **93053 Regensburg (DE)**
• **Obradovic, Dragan**
  **81669 München (DE)**
• **Schupfner, Markus**
  **93047 Regensburg (DE)**
• **Tiede, Lutz-Wolfgang**
  **93138 Lappersdorf (DE)**

(56) Entgegenhaltungen:
**EP-A1- 0 716 289    WO-A1-95/19021
US-A- 5 374 933    US-A1- 2001 002 458**

**Beschreibung**

Die Erfindung betrifft eine Ermittlung eines einem von einem mobilen System tatsächlich zurückgelegten Fahrweg entsprechenden Kartenfahrwegs in einer Karte.

Eine Ermittlung eines Fahrwegs in einer digitalen Karte ist aus [1] bekannt und wird dort im Rahmen eines Navigationssystems für ein Kraftfahrzeug verwendet.

Bei diesem Navigationssystem wird eine aktuelle, tatsächlich eingenommene Position des Kraftfahrzeugs ermittelt, eine entsprechende Kartenposition in der digitalen Karte, welche der tatsächlichen Position des Kraftfahrzeugs entspricht, bestimmt (Map Matching) und ein Ausschnitt der digitalen Karte mit der bestimmten Kartenposition einem Fahrer des Kraftfahrzeugs angezeigt.

Die Positionsermittlung und die Bestimmung der entsprechenden Kartenposition erfolgt bei dem aus [1] bekannten Navigationssystem während einer Fahrt des Kraftfahrzeugs in regelmäßigen, vorgegebenen Zeitintervallen zu vorgegebenen Zeitpunkten.

Aus der zeitlichen Abfolge der tatsächlichen Positionen des Kraftfahrzeugs lässt sich auf diese Weise der von dem Kraftfahrzeug tatsächlich zurückgelegte Fahrweg, ein sogenannter Sensorpfad, ermitteln.

Auf entsprechende Weise wird ein dem tatsächlichen Fahrweg entsprechender Fahrweg in der digitalen Karte, ein Kartenfahrweg oder ein Kartenpfad, ermittelt.

Entsprechend der einzelnen Kartenposition wird dem Fahrer auch der Kartenpfad einer Fahrt angezeigt. Dieses kann während der Fahrt online erfolgen oder auch nach Beendigung der Fahrt als fertiger, abgefahrener Kartenpfad. Dadurch kann der Fahrer seinen Fahrweg auf der digitalen Karte verfolgen bzw. nachvollziehen.

Zur Positionsermittlung werden bei dem aus [1] bekannten Navigationssystem zwei redundante Positionsermittlungssysteme, ein erstes und ein zweites Positionsermittlungssystem, verwendet.

Unter Verwendung des ersten und des zweiten Positionsermittlungssystems wird für eine aktuelle Position des Kraftfahrzeugs jeweils eine aktuelle Positionsinformation, eine erste Positionsinformation und eine zweite Positionsinformation ausgedrückt jeweils durch eine zurückgelegte Strecke des Kraftfahrzeugs und eine Ausrichtung des Kraftfahrzeugs, ermittelt.

Unter Verwendung der ersten Positionsinformation und der zweiten Positionsinformation wird eine Gesamtpositionsinformation, welche die aktuelle Position des Kraftfahrzeugs beschreibt, bestimmt.

Die Bestimmung der Gesamtpositionsinformation und damit der aktuellen Position des Kraftfahrzeugs ist in [1] beschrieben.

Das erste Positionsermittlungssystem dieses Navigationssystems besteht aus einem Odometer, mit welchem die zurückgelegte Strecke des Fahrzeugs ermittelt wird, sowie aus einem Gyroskop, mit welchem die Ausrichtung des Fahrzeugs ermittelt wird.

Das zweite Positionsermittlungssystem ist ein sogenanntes Global Positioning System (GPS), mit welchem ebenso wie mit dem ersten Positionsermittlungssystem die zurückgelegte Strecke und die Ausrichtung des Kraftfahrzeugs ermittelt wird.

Aus [4] sind weitere verschiedene Typen von Systemen nach Art des GPS bekannt, welche sich in einer Art einer durch sie ermittelten Positionsinformation unterscheiden.

Nach Ermittlung der tatsächlichen Position des Kraftfahrzeugs erfolgt ein sogenanntes Map Matching, bei dem die der tatsächlichen Position des Kraftfahrzeugs entsprechende Kartenposition in der digitalen Karte ermittelt wird.

Bei dem in [3] beschriebenen Map Matching erfolgt die Ermittlung einer der aktuellen tatsächliche Position entsprechenden Kartenposition derart, dass ausgehend von einem definierten, vorabbestimmten Startpunkt in der digitalen Karte und der vom Positionsermittlungssystem für die aktuelle Position ermittelten Gesamtpositionsinformation mittels einer Vektoroperation ("dead reckoning") und eines Projektionsalgorithmus ("map matching") eine der aktuellen Position möglicherweise entsprechende Kartenposition (mögliche Kartenposition) ermittelt wird.

Unter Verwendung einer Plausibilitätsprüfung wird die Plausibilität der möglichen Kartenposition geprüft und bei Feststellung einer hohen Plausibilität die mögliche Kartenposition als die der aktuellen tatsächlichen Position entsprechende Kartenposition akzeptiert.

Eine Abfolge von derartig ermittelten Kartenpositionen erzeugt den oben beschriebenen Kartenfahrweg oder Kartenpfad.

Weitere Map Matching Verfahren sind aus [5] bekannt.

Eine Zufriedenheit eines Nutzers eines solchen Navigationssystems, wie es aus [1] bekannt ist, hängt maßgeblich davon ab, wie gut und zuverlässig der Kartenfahrweg den tatsächlichen Fahrweg des Kraftfahrzeugs nachbildet oder beschreibt.

Der Erfindung liegt die Aufgabe zugrunde, ein Verfahren und eine Anordnung anzugeben, mit welchen ein Kartenfahrweg, welcher einem von einem mobilen System tatsächlich zurückgelegten Fahrweg entspricht, mit verbesserter Genauigkeit und Zuverlässigkeit als bei den oben beschriebenen Verfahren ermittelt werden kann.

Diese Aufgabe wird durch das Verfahren sowie durch die Anordnung mit den Merkmalen gemäß dem jeweiligen unabhängigen Patentanspruch gelöst.

Bei dem Verfahren zur Ermittlung eines einem von einem mobilen System tatsächlich zurückgelegten Fahrweg entsprechenden Kartenfahrwegs in einer Karte wird ein Mustervergleich eines ersten Fahrwegmusters mit einem zweiten Fahrwegmuster durchgeführt.

Das erste Fahrwegmuster wird ermittelt derart, dass das mobile System den tatsächlichen Fahrweg zurücklegt, wobei unter Verwendung eines Sensorsystems eine erste Fahrweginformation ermittelt und unter Verwendung der ersten Fahrweginformation das erste Fahrwegmuster bestimmt wird.

Das zweite Fahrwegmuster wird ermittelt derart, dass für den tatsächlich zurückgelegten Fahrweg unter Verwendung der Karte eine zweite Fahrweginformation ermittelt wird, welche einen dem tatsächlich zurückgelegten Fahrweg möglicherweise entsprechenden Kartenfahrweg in der Karte beschreibt. Unter Verwendung der zweiten Fahrweginformation wird das zweite Fahrwegmuster ermittelt.

Anschließend wird das erste Fahrwegmuster mit dem zweiten Fahrwegmuster verglichen. Bei dem Mustervergleich wird unter Verwendung eines vorgebbaren Vergleichskriteriums der möglicherweise entsprechende Kartenfahrweg als der dem tatsächlich zurückgelegten Fahrweg entsprechende Kartenfahrweg festgelegt.

Die Anordnung zur Ermittlung eines einem von einem mobilen System tatsächlich zurückgelegten Fahrweg entsprechenden Kartenfahrwegs in einer Karte weist auf:

- ein Sensorsystem, mit welchem für den von dem mobilen System zurückgelegten tatsächlichen Fahrweg eine erste Fahrweginformation und unter Verwendung der ersten Fahrweginformation ein erstes Fahrwegmuster ermittelbar ist,
- eine Kartenauswerteeinheit, mit welcher für den tatsächlich zurückgelegten Fahrweg unter Verwendung der Karte eine zweite Fahrweginformation ermittelbar ist, welche einen dem tatsächlich zurückgelegten Fahrweg möglicherweise entsprechenden Kartenfahrweg in der Karte beschreibt, und mit welcher unter Verwendung der zweiten Fahrweginformation ein zweites Fahrwegmuster ermittelbar ist,
- eine Mustervergleichseinheit, mit welcher das erste Fahrwegmuster mit dem zweiten Fahrwegmuster vergleichbar ist, wobei bei dem Mustervergleich unter Verwendung eines vorgebbaren Vergleichskriteriums der möglicherweise entsprechende Kartenfahrweg als der dem tatsächlich zurückgelegten Fahrweg entsprechende Kartenfahrweg ermittelbar ist.

Die erfinderische Anordnung ist insbesondere geeignet zur Durchführung des erfindungsgemäßen Verfahrens oder einer dessen nachfolgend erläuterten Weiterbildungen.

Anschaulich gesehen lässt sich die Erfindung in zwei Stufen unterteilen.

In einer ersten Stufe, einer Extrahierungsstufe, werden aus Fahrwegsinformationen, solchen ermittelt aus einer Sensorik und solchen ermittelt aus einer Karte, jeweils ein einen Fahrweg beschreibendes Muster extrahiert.

In einer zweiten Stufe, einer Mustervergleichsstufe, werden die Muster verglichen, der Vergleich bewertet und eine Entscheidung bzw. eine Festlegung getroffen.

Der besondere Vorteil der Erfindung liegt darin, dass aufgrund der Umwandlung eines Fahrwegs in ein entsprechendes Fahrwegmuster ein "längerfristiger" Verlauf des Fahrwegs bzw. eine Historie des Fahrwegs mitberücksichtigt werden kann.

Damit gründet sich ein Vergleich von Fahrwegen bei der Erfindung auf eine größere und damit zuverlässigere Datenbasis als dies bei dem bekannten Map Matching der Fall ist, bei dem nur eine aktuelle Positionsinformation, aber keine Historie eines Fahrwegs berücksichtigt wird.

Des weiteren ermöglicht die Erzeugung von entsprechenden Fahrwegsmustern bei der Erfindung eine Anwendung bekannter Verfahren zur Mustererkennung.

Bevorzugte, nicht triviale und erfinderische Weiterbildungen der Erfindung ergeben sich aus den abhängigen Ansprüchen.

Die im weiteren beschriebenen Weiterbildungen beziehen sich sowohl auf das Verfahren als auch auf die Anordnung.

Die Erfindung und die im weiteren beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer im weiteren beschriebenen Weiterbildung möglich durch ein computerlesbares Speichermedium, auf welchem ein Computerprogramm gespeichert ist, welches die Erfindung oder die Weiterbildung ausführt.

Auch kann die Erfindung oder jede im weiteren beschriebene Weiterbildung durch ein Computerprogrammerzeugnis realisiert sein, welches ein Speichermedium aufweist, auf welchem ein Computerprogramm gespeichert ist, welches die Erfindung oder die Weiterbildung ausführt.

Bei einer Weiterbildung sind/ist die erste und/oder zweite Fahrweginformation Positionsinformationen bzw. eine Positionsinformation des mobilen Systems.

Eine solche Positionsinformation kann eine Ausrichtung und/oder eine Ausrichtungsänderung und/oder eine Fahrwegstrecke des mobilen Systems beinhalten.

Ferner ist es zweckmäßig, bei einer Weiterbildung ein Fahrwegmuster durch mindestens einen Merkmalsvektor, umfassend mindestens ein Merkmal "Gerade" oder ein Merkmal "Kurve", oder eine Abfolge von derartigen Merkmalsvektoren, deren jeder mindestens das Merkmal "Gerade" oder das Merkmal "Kurve" umfasst, zu beschreiben. Die Verwendung eines solchen Merkmalsvektors mit derart anschaulichen Merkmalen macht eine solche Weiterbildung besonders anschaulich und einfach.

Das Merkmal "Gerade" kann besonders einfach durch eine Streckenlänge unter Verwendung der Fahrwegstrecke ermittelt bzw. beschrieben werden. Das Merkmal "Kurve" kann durch einen Winkel unter Verwendung der Ausrichtungsänderung ermittelt bzw. beschrieben werden.

Eine solche Merkmalsermittlung bietet den Vorteil, dass dadurch Fahrwegverläufe oder den Fahrwegverläufen zugrundeliegende Signalverläufe durch Integration geglättet werden können. Singuläre Ereignisse oder Rauschfehler bzw. Rauschverzerrungen bleiben unberücksichtigt.

In der Regel können zur Ermittlung von Merkmalen bzw. Merkmalsvektoren sogenannte, allgemein gebräuchliche Zustandsmaschinen verwendet werden.

Unter einer Zustandsmaschine, welche beispielsweise in [2] beschrieben ist, ist ein Programm oder eine ein Programm ausführende Recheneinheit zu verstehen, welches bzw. welche aus ihm bzw. ihr zugeführten Zustandsgrößen, beschreibend ein Zustandsverhalten eines Systems, unter Verwendung vorgegebener, an einen Anwendungsfall angepasster Regeln einen Zustand des Systems ermittelt. Die vorgegebenen Regeln können beispielsweise einen Übergang zwischen zwei Zuständen des Systems beschreiben.

In einer Ausgestaltung beinhaltet das vorgebbare Vergleichskriterium ein Fehlermaß, welches unter Verwendung eines Winkelfehlers und/oder eines Längenfehlers ermittelt wird.

Bei der Ermittlung des Winkelfehlers und/oder des Längenfehlers kann eine statistische Wahrscheinlichkeitsverteilung, insbesondere eine Gauss-Verteilung berücksichtigt werden. Andere Funktionen für die Berücksichtigung, wie eine dreieckige oder quadratische Kostenfunktion, welche geeignet normiert werden können, können auch verwendet werden. Dadurch lasst sich die Zuverlässigkeit beim vergleich erhöhen.

Eine weitere Verbesserung der Zuverlässigkeit bei dem vergleich lässt sich dadurch realisieren, dass bei der Ermittlung des Fehlermaßes der Winkelfehler und/oder der Längenfehler jeweils bewertet und gewichtet werden.

Auch kann das Vergleichskriterium abhängig von dem tatsächlich zurückgelegten Fahrweg gewählt werden.

In einer Ausgestaltung der Erfindung weist das Sensorsystem mindestens eines der folgenden Sensorsysteme auf: ein Odometer, ein Gyroskop, ein GPS-System.

Ferner ist es zweckmäßig, dass die Karte eine digitale Karte ist. In diesem Fall können moderne digitale Mittel zur Datenverarbeitung bei der Realisierung der Erfindung verwendet werden.

In einer Weiterbildung wird die Erfindung eingesetzt in einem Navigationssystem, beispielsweise in einem Navigationssystem in einem Kraftfahrzeug, wobei die Karte in dem Navigationssystem gespeichert ist, in welche der ermittelte entsprechende Kartenfahrweg eingezeichnet wird.

Auch kann eine Weiterbildung der Erfindung einsetzt werden zu einer Positionskorrektur des mobilen Systems derart, dass die zweite Fahrweginformation unter Verwendung der ersten Fahrweginformation korrigiert wird.

Ausführungsbeispiele der Erfindung sind in Figuren dargestellt und werden im weiteren näher erläutert.

Es zeigen

Figur 1      eine Skizze eines Navigationssystems mit Komponenten in einem Kraftfahrzeug gemäß einem Ausführungsbeispiel;

Figur 2      eine Skizze, welche eine Zusammenwirken von Komponenten und deren Funktion in einem Navigationssystem gemäß einem Ausführungsbeispiel beschreiben;

Figur 3      eine Skizze von Verfahrensschritten eines Verfahrens zur Bestimmung eines Kartenpfads gemäß einem Ausführungsbeispiel;

Figuren 4a, 4b      schematische Darstellungen von einer ersten Zustandsmaschine für Sensordaten und einer zweiten Zustandsmaschine für Kartendaten gemäß einem Ausführungsbeispiel;

Figur 5      schematische Darstellung einer Sensorpfads und zweier möglicher Kartenpfade in einer Karte gemäß einem Ausführungsbeispiel;

Figur 6      schematische Darstellung einer Positionskorrektur durch Mustererkennung gemäß einem Ausführungsbeispiel;

| Figuren | 7a, 7b tabellarische Übersicht über Verfahren verwendet bei einem Mustervergleich gemäß einem Ausführungsbeispiel; |
| --- | --- |
| Figur 8 | Anzeige eines Kartenpfads in einer digitalen Karte gemäß einem Ausführungsbeispiel. |
| Figur 9 | Winkelbewertung mittels einer Gaußverteilung gemäß einem Ausführungsbeispiel. |

Ausführungsbeispiel: Navigationssystem in einem Kraftfahrzeug

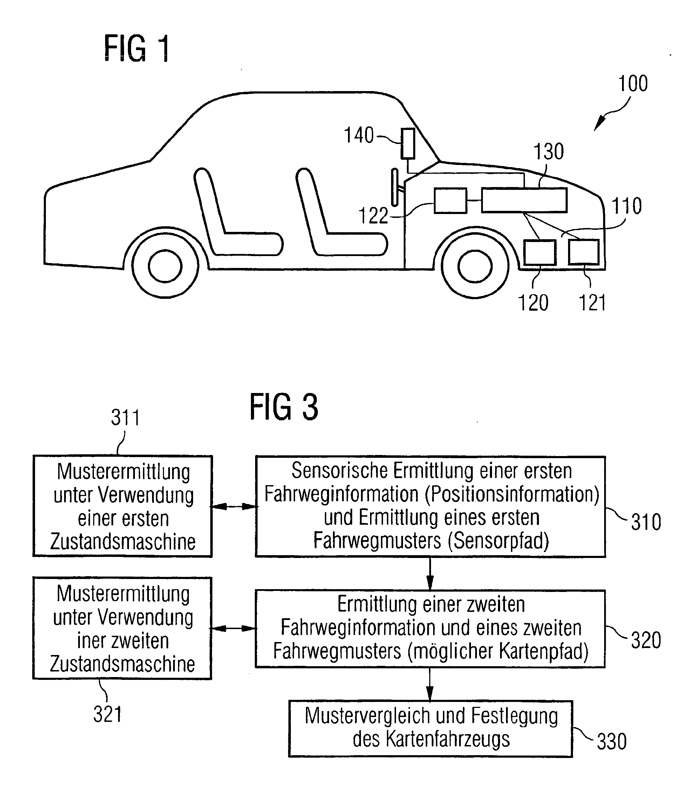

Fig.1 zeigt ein Kraftfahrzeug 100, welches mit einem Navigationssystem 110 ausgestattet ist.

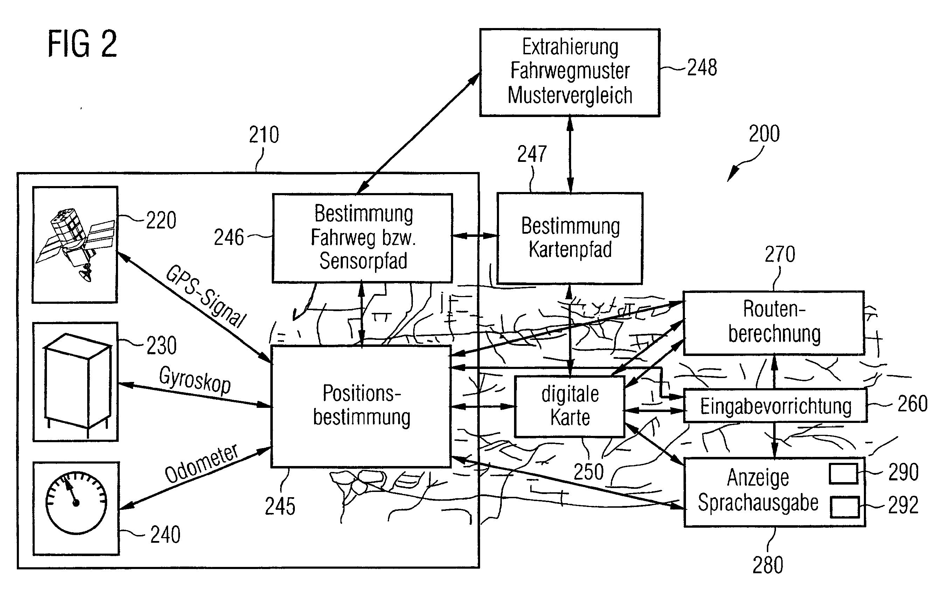

Komponenten dieses Navigationssystems 110 sind in Fig.1 und Fig.2 schematisch und in ihrem Zusammenwirken dargestellt und werden nachfolgend beschrieben.

Die Komponenten des Navigationssystems 200 sind derart mit Verbindungen jeweils miteinander verbunden, dass Daten, welche in den einzelnen Komponenten ermittelt oder gemessen werden, in die anderen Komponenten übertragen werden können und dort für eine Weiterverarbeitung, beispielsweise durch entsprechend eingerichtete digitale Datenverarbeitungsmittel, zur Verfügung stehen.

Die Verbindungen zwischen den Komponenten des Navigationssystems 200 sind in Fig.2 durch Pfeile dargestellt, wobei eine Pfeilrichtung eine Übertragungsrichtung der Daten zwischen zwei miteinander verbundenen Komponenten verdeutlicht.

Das Navigationssystem 200 umfasst ein Positionsermittlungssystem 210, welches wiederum drei unabhängige Positionsermittlungssysteme, ein GPS-System 220, ein Gyroskop 230 und ein Odometer 240, aufweist.

Unter Verwendung des Gyroskops 230 und des Odometers 240 wird eine aktuelle, erste Positionsinformation einer aktuellen Position des Kraftfahrzeugs ermittelt.

Unter Verwendung des GPS-Systems 220 wird eine zweite aktuelle, zu der ersten Positionsinformation redundante Positionsinformation ermittelt .

Unter Verwendung der ersten und der dazu redundanten, zweiten Positionsinformation wird eine verbesserte, weil genauer, aktuelle Positionsinformation für die aktuelle Position des Kraftfahrzeugs 100 ermittelt 245.

Die Positionsermittlung 245 erfolgt während einer Fahrt des Kraftfahrzeugs in regelmäßigen, vorgegebenen Zeitintervallen zu vorgegebenen Zeitpunkten, wodurch ein von dem Kraftfahrzeug tatsächlich zurückgelegter Fahrweg, ein Sensorpfad, ermittelt wird 246.

In dem Navigationssystem 200 ist eine digitale Landkarte 250 gespeichert. Die digitale Landkarte 250 ist ein digitalisiertes Bild einer Umgebung des Kraftfahrzeugs 100, in welcher Verkehrsverbindungen sowie andere verkehrsrelevante Informationen, beispielsweise Städte und deren Verkehrsnetze, eingetragen sind.

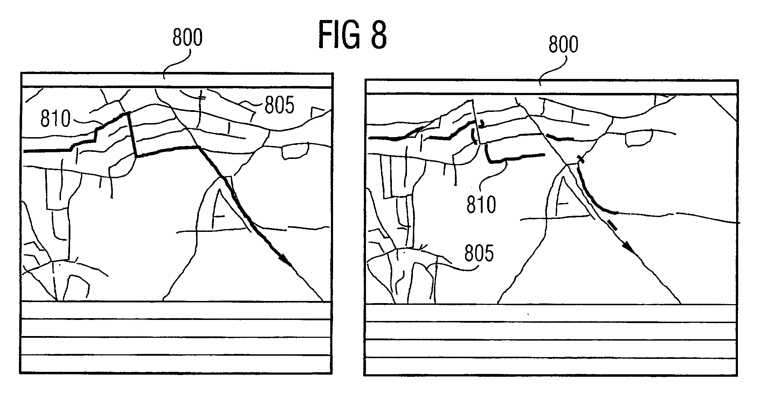

Das Navigationssystem 200 weist ferner eine Anzeigeeinheit 280 auf, welche ein optisches Ausgabemittel 290 (Fig.8, 800) und ein akustisches Ausgabemittel 292 umfasst und auf welcher die digitale Landkarte 250 oder relevante Teile der digitalen Landkarte 250 (Fig.8, 805) anzeigbar sind.

Gemäß einem mehrstufigen, im folgenden beschriebenen und in Figur 3 dargestellten Verfahren 248 wird für den Sensorpfad ein entsprechender Kartenpfad in der digitalen Karte 250 ermittelt 247, welcher auf der Anzeigeeinheit 280 angezeigt 250 wird (Fig.8, 810).

Der Fahrer kann auf diese Weise seine aktuelle Position als aktuelle Kartenposition in der digitalen Karte 250 erkennen sowie seinen Fahrweg auf der digitalen Karte verfolgen bzw. nachvollziehen.

Außerdem weist das Navigationssystem 200 eine Eingabevorrichtung 260 auf, mit welcher eine Zielposition des Kraftfahrzeugs 100 von einem Fahrer des Kraftfahrzeugs 100 in das Navigationssystem 200 eingegeben werden kann.

Eine Routenberechnungseinheit 270 des Navigationssystems 250 ermittelt unter Verwendung der eingegebenen Zielposition, des Kartenpfads, der aktuellen Position des Kraftfahrzeugs sowie der aktuellen Kartenposition des Kraftfahrzeugs 100 eine fahrwegkürzeste Route zu der Zielposition.

Es ist darauf hinzuweisen, dass auch eine hinsichtlich eines anderen Kriteriums, beispielsweise Fahrzeit, optimale Route ermittelt werden kann.

Die Anzeigeeinheit 280 des Navigationssystems 200 ist ferner derart eingerichtet, dass dem Fahrer des Kraftfahrzeugs 100 die fahrwegkürzeste (oder andere optimale) Route zu der eingegebenen Zielposition akustisch und optisch angezeigt.

Fig.1 zeigt das Gyroskop 120, das Odometer 121 sowie das GPS 122, welche jeweils über Datenleitungen 123 mit einer Recheneinheit 130 verbunden sind.

Es ist darauf hinzuweisen, dass eine Datenleitung auch eine Funkstrecke oder ein anderes Medium ein kann.

In der Recheneinheit 130 ist die digitale Landkarte 250 sowie ein erstes Softwareprogramm gespeichert, unter Verwendung dessen die jeweils aktuelle Positionsinformation des Kraftfahrzeugs zu einem Zeitpunkt und aus mehreren aktuellen Positionsinformationen der Sensorpfad für einen Fahrweg ermittelt wird.

In der Recheneinheit 130 ist ein zweites Softwareprogramm gespeichert, mit welchem der dem Sensorpfad entsprechende Kartenpfad sowie die aktuelle Kartenposition des Kraftfahrzeugs in der digitalen Landkarte ermittelt wird.

Mit einem dritten, in der Recheneinheit 130 gespeicherten Softwareprogramm wird unter Verwendung vorher bestimmter Informationen die fahrwegkürzeste Route zu der vorgegebenen Zielposition bestimmt wird.

Fig.1 zeigt das Eingabemittel 140 zur Eingabe der Zielposition des Kraftfahrzeugs sowie das Ausgabemittel zur Ausgabe des Kartenpfades, der aktuellen Kartenposition des Kraftfahrzeugs sowie der fahrwegkürzesten Route zu der Zielposition.

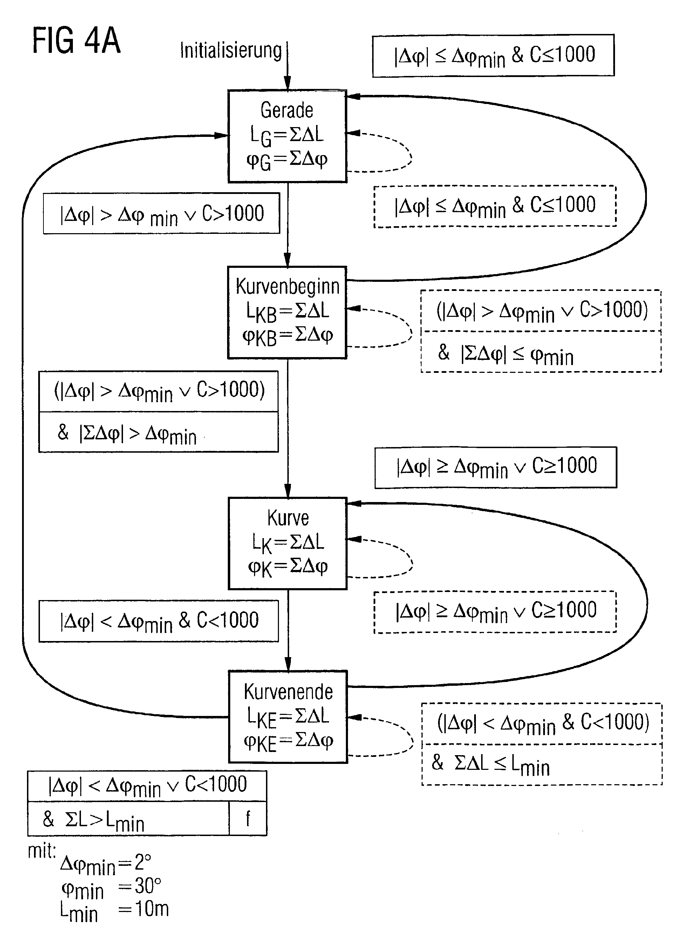

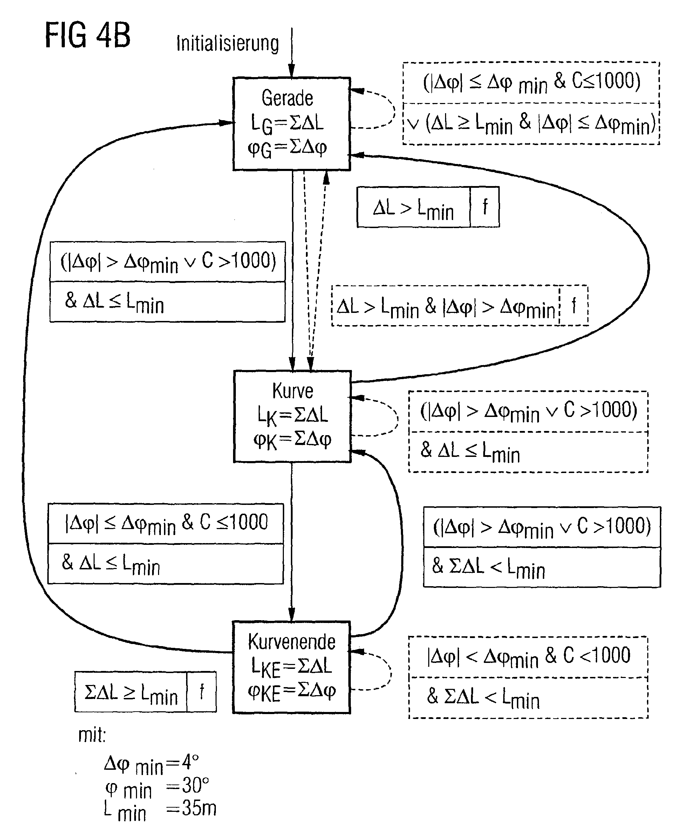

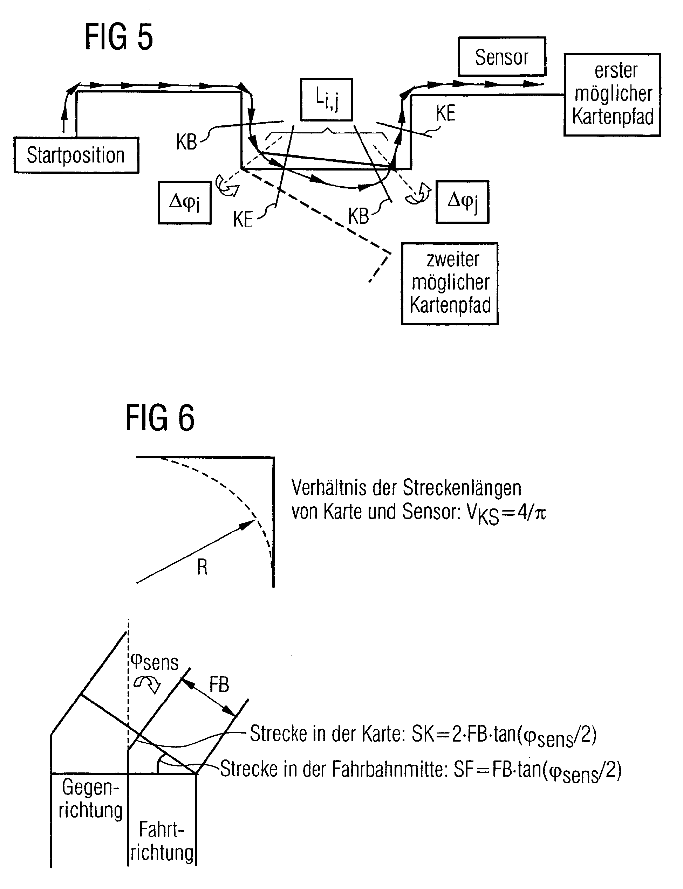

In Fig.3, ergänzt durch Figuren 4a,4b und 5, sind Verfahrensschritte 300 (Schritte 310 bis 330) zur Ermittlung eines Kartenpfades für einen von einem Kraftfahrzeug zurückgelegten Fahrweg dargestellt.

Die nachfolgend beschriebenen Verfahrensschritte 300 werden fortlaufend während eines Betriebs des Navigationssystems 110 bzw. 200 bzw. während des Zurücklegens eines Fahrwegs durchgeführt, sodass zu jedem Zeitpunkt ein aktueller Kartenpfad und eine aktuelle Kartenposition des Kraftfahrzeugs ermittelt wird.

Schritt 310: Sensorische Ermittlung einer ersten Fahrweginformation (Positionsinformation) und Ermittlung eines ersten Fahrwegmusters (Sensorpfad)

Schritt 311: Musterermittlung des ersten Fahrwegmusters unter Verwendung einer ersten Zustandsmaschine (Fig.4a)

Schritt 320: Ermittlung einer zweiten Fahrweginformation und Ermittlung eines zweiten Fahrwegmusters (möglicher Kartenpfad)

Schritt 321: Musterermittlung des zweiten Fahrwegmusters unter Verwendung einer zweiten Zustandsmaschine (Fig.4b)

Schritt 330 Mustervergleich des ersten Fahrwegmusters mit dem zweiten Fahrwegmuster und Festlegung des Kartenfahrwegs (Fig.5)

Fahrwegermittlung durch Mustererkennung

Nachfolgend wird oben beschriebenes Verfahren 300 (Schritte 310 bis 330) zur Ermittlung eines Kartenpfades für einen von einem Kraftfahrzeug zurückgelegten Fahrweg mit Bezugnahme auf die Figuren 4a, 4b und 5 weiter ausgeführt.

Das grundlegende Vorgehen bei diesem Verfahren basiert auf zwei aufeinanderfolgende Stufen, einer Extrahierungsstufe und einer Mustervergleichsstufe:

In einer ersten Stufe, der Extrahierungsstufe, werden aus Fahrwegsinformationen, solchen ermittelt aus einer Sensorik und solchen ermittelt aus einer Karte, jeweils ein einen Fahrweg beschreibendes Muster extrahiert.

In einer zweiten Stufe, der Mustervergleichsstufe, werden die Muster verglichen, der Vergleich bewertet und eine Entscheidung bzw. eine Festlegung getroffen.

Als Informationsquellen bei dem Verfahren werden die fahrzeuginternen Sensoren Gyroskop 120 und Odometer 121, das GPS 122 sowie die digitale Karte 250 genutzt.

Einzelne Merkmale des Kartenpfades bzw. der Kartepfade bei mehreren möglichen Kartenpfaden sowie des Sensorpfades, welche Merkmale das jeweilige Fahrwegmuster beschreiben, werden durch Zustandsmaschinen ermittelt.

Unter einer Zustandsmaschine, welche in [2] beschrieben ist, ist ein Programm oder eine ein Programm ausführende Recheneinheit zu verstehen, welches bzw. welche aus ihm bzw. ihr zugeführten Zustandsgrößen, beschreibend ein Zustandsverhalten eines Systems, unter Verwendung vorgegebener, an einen Anwendungsfall angepasster Regeln einen Zustand des Systems ermittelt. Die vorgegebenen Regeln können beispielsweise einen Übergang zwischen zwei Zuständen des Systems beschreiben.

Das Muster jedes Pfades ergibt sich aus einer Abfolge und aus Werten der jeweiligen Merkmale. Daher werden die Merkmale in einem Merkmalsvektor zusammengefasst. Anschließend werden die Muster der einzelnen Kartenalternativen durch Vergleich mit dem Sensormuster bewertet.

Erzeugung von Merkmalsvektoren durch Zustandsmaschinen

Festlegung der Zustände und der Regeln für die Übergänge Basierend auf relativen Größen, ermittelt aus den Sensordaten, des GPS sowie der digitalen Karte, werden unter Verwendung der Zustandsmaschinen die Merkmale "Gerade" und "Kurve" bestimmt (Fig.4a und b). Dabei repräsentieren die Merkmale entsprechende Zustände des Systems, in diesem Fall den Fahrweg.

Die Merkmale sind abschnittsweise summierte Größen. Das Merkmal "Gerade" wird beschrieben durch eine Distanz zwischen (geschätzten) Scheitelpunkten von zwei Kurven. Das Merkmal "Kurve" wird beschrieben durch eine Änderung einer Ausrichtung des Fahrzeugs in Folge der Kurve an (Fig.5).

Zusätzlich zu den Merkmalen "Gerade" und "Kurve" ist eine Einnahme von Zwischenzuständen, repräsentiert durch die "Zwischen"-Merkmale "Kurvenbeginn" und "Kurvenende", möglich, d.h. die Zustandsmaschine ermittelt einen Zwischenzustand "Kurvenbeginn" oder "Kurvenende", welcher weder dem Merkmal "Gerade" noch dem Merkmal "Kurve" zugeordnet werden kann (Fig. 4a und b).

Durch die Einnahme von solchen Zwischenzuständen können Übergänge zwischen Zuständen bzw. zwischen den Merkmalen "Gerade" und "Kurve" verhindert oder hinausgezögert werden. Dadurch steigt eine Robustheit gegenüber Ungenauigkeiten in den Sensordaten und der digitalen Karte. Insgesamt erhöht sich eine Zuverlässigkeit der Mustererkennung.

Wichtig für eine Realisierung einer Zustandsmaschine ist die Auswahl der möglichen Zustände, in diesem fall "Gerade" und "Kurve", sowie eine Festlegung von Regeln für die Übergänge zwischen zwei Zuständen.

Die Regeln sind durch Schlussfolgerungen aus einer Abfrage von mindestens einer Größe eines Merkmals nach mindestens einem vorgegebenen Schwellwert gegeben (Fig.4a und b).

Den Schwellwerten der Zustandsmaschinen kommt daher eine entscheidende Bedeutung zu. Sie bestimmen wann ein Übergang von einem Zustand in den nächsten stattfindet. Auch legen sie fest, ob ein Merkmal als signifikant anzusehen ist.

Als Größen werden bei dem Verfahren eine aktuelle Winkeländerung, eine seit einem Kurvenbeginn akkumulierte Winkeländerung, eine Krümmung (inverser Radius) und die zurückgelegte Strecke seit Einnahme des gegenwärtigen Zustands genutzt.

Da die beiden Arten von Pfaden (Sensor und Karte) mit unterschiedlicher Auflösung vorliegen, wird für jede dieser Pfadarten eine eigene Zustandsmaschine genutzt.

Die Regeln für die Zustandsübergänge (Fig.4a und b) sind derart abgestimmt, dass für die verschiedenen Pfade möglichst gleich lange Folgen von Merkmalen generiert werden. Insgesamt wird das Verfahren dadurch sehr robust, denn es verhindert durch eine sequentielle Abfolge von Entscheidungen eine Akkumulation von Fehlern.

Zustandsmaschine für Sensordaten

In Fig.4a ist die Zustandsmaschine für Sensordaten dargestellt - mit den vier möglichen Zuständen, den zwei Zuständen bzw. Merkmalen "Gerade" und "Kurve" und den zwei Zwischenzuständen bzw. Merkmalen "Kurvenbeginn" und "Kurvenende" sowie den Regeln für die Zustandsübergänge.

$\Delta\varphi$ gibt die aktuelle Winkeländerung, d.h. die Winkeländerung in einem aktuellen Zeitschritt, an, $\Sigma\Delta\varphi$ gibt die im aktuellen Zustand akkumulierte Winkeländerung an, $C$ ist die Krümmung (engl. curvature) und $\Sigma\Delta L$ bezeichnet die im aktuellen Zustand zurückgelegte akkumulierte Distanz. Eine normierte Krümmung von etwa 1000 bedeutet eine Winkeländerung von 1000°/km = 1°/m, die zugehörige Kurve hat damit einen Radius von etwa 60m.

Die Merkmale "Gerade" mit der Länge L und "Kurve" mit der Winkeländerung φ werden paarweise beim Übergang von "Kurvenende" zu "Gerade" ausgegeben. Dieser Übergang ist in Abbildung 2 mit "f" gekennzeichnet. Mit den Indizes $KB$ für Kurvenbeginn, $K$ für Kurve, $KE$ für Kurvenende und $G$ für Gerade gilt:

$$L = L_{KE} + L_G + (L_{KB} + L_K) / 2, \qquad (1)$$

$$\varphi = \varphi_{KA} + \varphi_K . \qquad (2)$$

Die in Fig.4a angegebenen Schwellwerte wurden anhand der Analyse von Testfahrten bestimmt. Bei der Einstellung bzw. Veränderung der Schwellwerte ist folgendes zu beachten:

- $\Delta\varphi$ oder $C$ zu groß: langsam gefahrene Kurven werden unterdrückt.
- $\Delta\varphi$ oder $C$ zu klein: der Zustand "Kurve" wird nicht mehr verlassen.
- $\varphi_{min}$ bestimmt, ab welcher Winkeländerung eine Kurve signifikant ist, d.h. ab wann eine Kurve ein relevantes Merkmal darstellt.
- $L_{min}$ bestimmt, wie weit zwei Kurven mindestens voneinander entfernt liegen müssen, damit sie nicht als eine zusammenhängende Kurve detektiert werden.

Zustandsmaschine für Kartendaten

In Fig.4b ist die Zustandsmaschine für die Kartendaten dargestellt - mit den drei möglichen Zuständen, den zwei Zuständen bzw. Merkmalen "Gerade" und "Kurve" und einem Zwischenzustand bzw. Merkmal "Kurvenbeginn" sowie den Regeln für die Zustandsübergänge.

Die Zustandsmaschine für die Kartendaten besitzt einen Zustand weniger (Kurvenbeginn) als die Zustandsmaschine für die Sensordaten, weil Kartendaten und Sensordaten unterschiedliche Auflösungen besitzen.

So kommen bei den Kartendaten, insbesondere im städtischen Bereich, häufig singuläre Kurven vor, d.h. Kurven, die in der Karte die Länge Null besitzen. Bei dieser Art von Kurven wechselt der Zustand in einem Zeitschritt von "Gerade" nach "Kurve" und wieder zurück zu "Gerade" und das Merkmalspaar wird sofort extrahiert. Ein Zustand "Kurvenbeginn" würde diesen Ablauf behindern. Eine Einnahme des Zustandes Kurvenende ist möglich, dies findet aber nur dann statt, wenn eine Straße fast geradeaus läuft und mit kurzen Segmenten digitalisiert ist. Ist dies am Kurvenbeginn der Fall, so wird zunächst in den Zustand "Kurve" gegangen. Sollte die Gesamtrichtungsänderung zu klein bleiben, so wird das Kurvenmerkmal unterdrückt und wieder der Zustand "Gerade" eingenommen.

Insgesamt besitzt die Zustandsmaschine für die Kartendaten andere Regeln und Schwellwerte als die Zustandsmaschine für die Sensordaten (z.B. 4° Winkeländerung im Vergleich zu 2°). Dies liegt ebenfalls in der unterschiedlichen Auflösungsgenauigkeit von Sensor- und Kartendaten begründet. Die Einstellung der Schwellwerte der Zustandsmaschine für die Kartendaten erfolgte wie bei den Sensordaten auf der Basis von Testfahrten - und nun so, dass etwa gleich lange Folgen von Merkmalen für die Sensor- und Kartendaten entstehen.

Für die Einstellung bzw. Veränderung der Schwellwerte gilt entsprechendes wie für die Zustandsmaschine für die Sensordaten.

Die Merkmale bei den Kartendaten werden, wie bei den Sensordaten, immer paarweise, d.h. beschrieben durch jeweils zwei Größen, ausgegeben.

Die Übergänge, bei denen Kartenmerkmale ausgegeben werden können, sind in Fig.4b mit "f" gekennzeichnet. Merkmale werden aber nur dann ausgegeben, falls die akkumulierte Winkeländerung größer als $\varphi_{min}$ (z. Zt. 30 Grad) ist.

Merkmalsvektoren für Sensor- und Kartendaten

Die mit den Zustandsmaschinen ermittelten Merkmale werden in 2-dimensionalen Vektoren gespeichert.

Für die Sensorsignale gibt es nur eine Abfolge von Vektoren, welche das Muster des einen Sensorpfads angibt. Für die digitale Karte sind mehrere solcher Abfolgen von Vektoren möglich, nämlich entsprechend einer Anzahl von möglichen Kartenpfaden. Jede Vektorabfolge gibt dabei das Muster des jeweiligen möglichen Kartenpfads an.

Fig.5 zeigt beispielhaft zwei solche mögliche Kartenpfade.

Vergleich und Bewertung von Mustern in Sensor- und Kartendaten

Vergleich der Merkmale

Die mit den Zustandsmaschinen ermittelten Merkmalsvektoren bzw. Vektorabfolgen repräsentieren die Muster im Sensorpfad und in den Kartenpfaden.

Durch einen Vergleich der Mustervektoren von Sensorpfad und jeweils eines Kartenpfades kann das Muster des Kartenpfades bewertet werden.

Die Bewertung eines Kartenmusters wird im folgenden auch als Pattern Certainty PC bezeichnet.

Die Pattern Certainty wird iterativ durch den Vergleich eines Merkmalpaares (Länge und Winkel) des Sensorpfades ($L_{sens}$, $\varphi_{sens}$) mit dem zugehörigen Merkmalpaar des Kartenpfades ($L_{map}$, $\varphi_{map}$) ermittelt (siehe Gleichungen 3 bis 5).

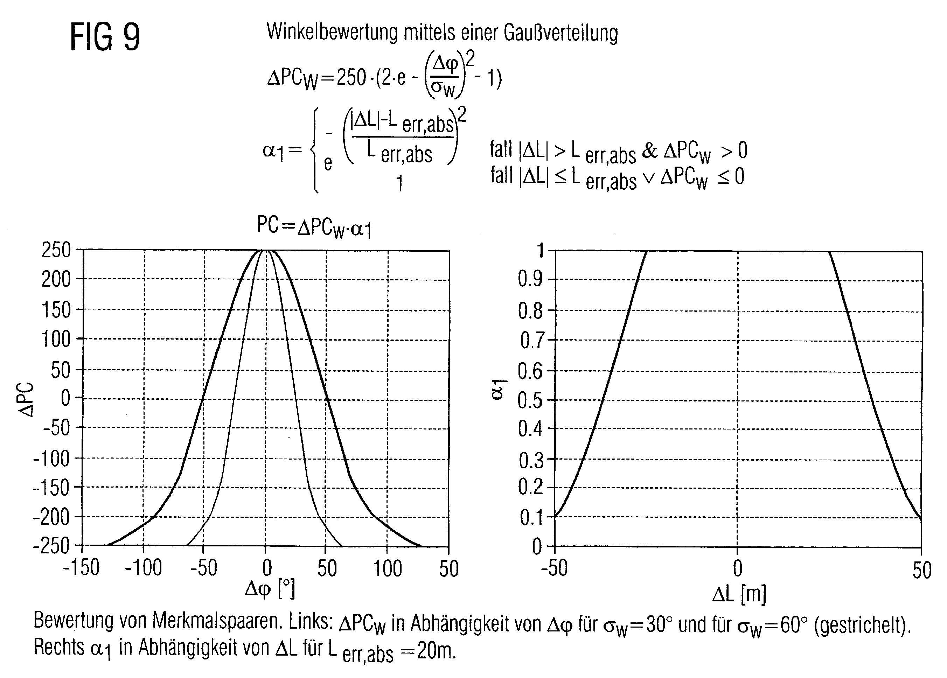

Zunächst werden die beiden Winkel mittels einer Gaußverteilung bewertet ($\Delta PC_W$, siehe Gleichung 3 und Fig.9).

Die Standardabweichung dieser Verteilung besitzt dabei den Wert 30°. Falls die Summe der Winkeländerungen von Karte und Sensor groß genug ist, erhöht sich die Standardabweichung bis auf 60°, d.h. die Sensitivität gegenüber Winkeldifferenzen zwischen Karten- und Sensormerkmal wird reduziert.

Dieser Wert $\Delta PC_W$ wird mit dem Ergebnis der Längenbewertung ($\alpha_l$) multipliziert (siehe Gleichung 4 und Abbildung 5). In den Gleichungen gibt $L_{err,abs}$ den absoluten zulässigen Längen- bzw. Positionsfehler an, und es gilt: $\Delta\varphi = \varphi_{sens} - \varphi_{map}$ und $\Delta L = L_{sens} - L_{map}$.

$$\Delta PC_W = 250 \cdot (2 \cdot e^{-\left(\frac{\Delta\varphi}{\sigma_W}\right)^2} - 1) \qquad (3)$$

$$\alpha_1 = \begin{cases} e^{-\left(\frac{|\Delta L| - L_{err,abs}}{L_{err,abs}}\right)^2} & \text{falls } |\Delta L| > L_{err,abs} \ \& \ \Delta PC_W > 0 \\ 1 & \text{falls } |\Delta L| \leq L_{err,abs} \ \lor \ \Delta PC_W \leq 0 \end{cases}$$

$$(4)$$

$$PC = \Delta PC_W \cdot \alpha_1 \qquad\qquad (5)$$

Die Winkelbewertung ergibt einen Wert zwischen minus 250 und plus 250. Durch die Längenbewertung, die immer zwischen 0 und 1 liegt, kann der Einfluss eines Merkmals verringert werden. Bei einer numerischen Berechnung ist sicherzustellen, dass für $\Delta PC_W > 0$ immer $\Delta PC_W \cdot \alpha_1 > 1$ gilt.

Je mehr informative Pattern aufgetreten sind, um so besser wird das Pattern bewertet, z.B. wird nach vier informativen Merkmalen, die exakt übereinstimmen, die maximale Pattern Certainty 1000 erreicht.

Die Berechnung der Pattern Certainty wird daneben über eine weitere Zustandsmaschine gesteuert, die einen Bearbeitungsstatus der betrachteten Possibility angibt.

Dieser Status wird mit "UNDEFINED" initialisiert.

Hat eine Possibility selbst weitere mögliche, an einem Verzweigungspunkt abzweigende Unterpfade, sogenannte Kinder, so wird der zugehörige Bearbeitungsstatus zunächst auf "NEW_PARENT" gesetzt.

Sobald der Sensorpfad weit genug von dem Verzweigungspunkt entfernt ist, an dem die Parent-Possibility sitzt, wird der Bearbeitungsstatus auf "OLD_PARENT" gesetzt und die Pattern Certainty exponentiell mit der gefahrenen Strecke $L_s$ heruntergefahren:

$$PC = PC_{old} \cdot e^{-\left(\frac{L_S - L_{err,abs}}{\sigma_L}\right)^2}. \qquad\qquad (6)$$

Dabei ist $\sigma_L = 70m$ und $PC_{old}$ die Pattern Certainty zu Beginn der exponentiellen Abnahme.

Der Bearbeitungsstatus von Possibilities ohne Kinder wird auf "DONE" gesetzt, falls die Bewertung zu einer Erhöhung der Pattern Certainty geführt hat, sonst wird dieser Status auf "DECREASE" gesetzt und die Pattern Certainty in der Folge gemäß Gleichung (6) reduziert.

Die Abnahme der Pattern Certainty durch Unterschiede in den Merkmalen von Karte und Sensor ist damit stärker als die Zunahme der Pattern Certainty bei Gemeinsamkeiten in diesen Merkmalen.

Falls nur in einem Pfad (entweder Karte oder Sensor) ein neues Merkmal aufgetreten ist und sich der andere Pfad in einem Kurvenzustand befindet, so wird der Bearbeitungsstatus auf "WAIT" gesetzt.

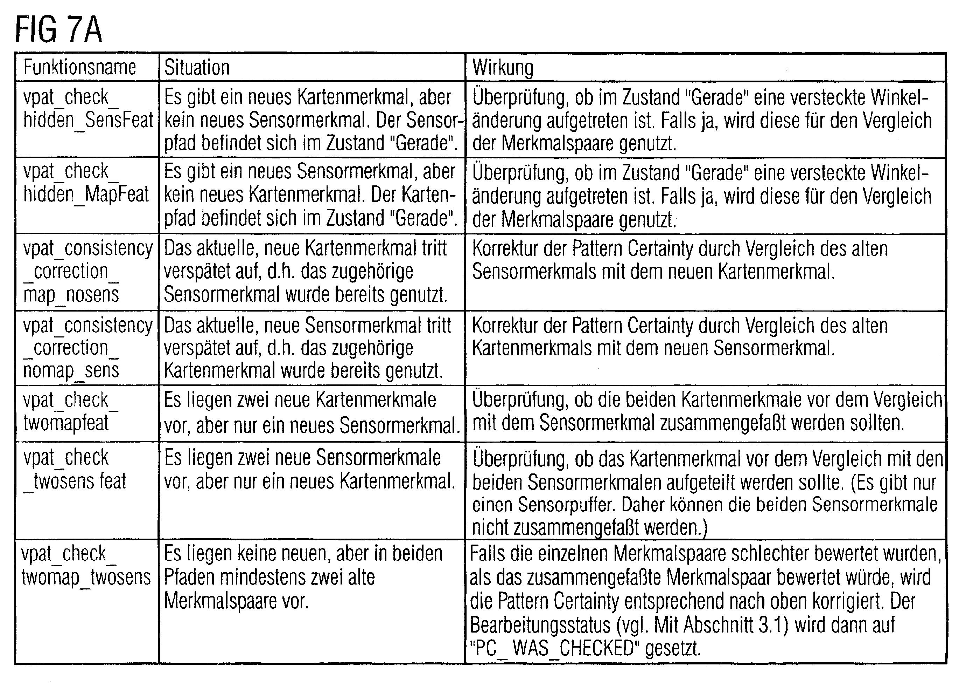

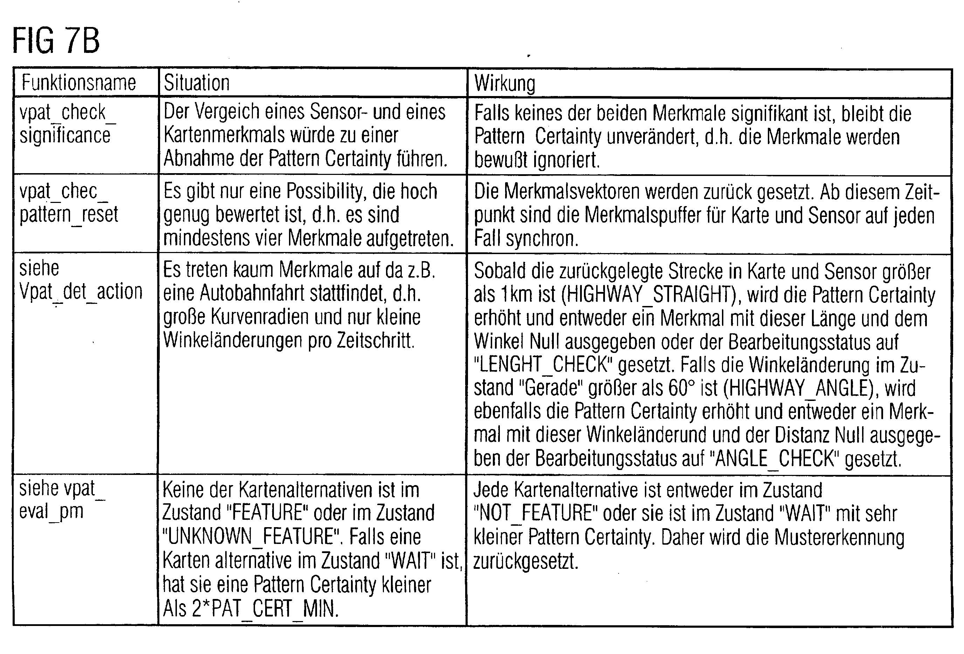

Nach Ausführung einer Funktion vpat_check_twomap_twosens( ) (Fig.7a und b) ist der Status "PC_WAS_ CHECKED" möglich.

Daneben kann bei Geradeausfahrt von Karte und Sensor der Status "LENGTH_CHECK" oder der Status "ANGLE_CHECK" eingenommen werden.

Sobald nur noch eine Possibility existiert wird mit dem Mustervergleich von Neuem begonnen.

Falls die ausgewählte Possibility bereits existierte, so kann die Historie in Form der Pattern Certainty übernommen werden. Wurde die Possibility aber gerade erst neu erzeugt (z.B. durch einen off-to-on-road-search), so wird die Pattern Certainty mit Null initialisiert.

In den nächsten Schritten besitzt diese Possibility nur eine kurze Vergangenheit und damit nur ein kurzes Muster mit einer niedrigen Pattern Certainty. In dieser Zeit wird die Pattern Certainty daher künstlich erhöht:

$$PC^* = \begin{cases} 0 & \text{falls} \quad N_{map\_feat} = 0 \\ PC \cdot \dfrac{4}{N_{map\_feat}} & \text{falls} \quad 0 < N_{map\_feat} < 4 \\ PC & \text{falls} \quad N_{map\_feat} \geq 4. \end{cases} \quad\quad (7)$$

Sobald erste signifikante Merkmale gemeinsam im Sensorpfad und im Kartenpfad aufgetreten sind, steigt auch die ursprüngliche Bewertung der Mustererkennung wieder an und die künstliche Anhebung wird bis auf Null reduziert.

Steigerung der Konsistenz

Bei der Entwicklung der Zustandsmaschinen wurden die Regeln für die Zustandsübergänge so abgestimmt, dass für die verschiedenen Pfade (Karte, Sensor) möglichst gleich lange Folgen von Merkmalen entstehen.
Da dies aber nicht immer exakt gelingen kann, wurden zusätzlich Vorkehrungen getroffen, die daraus resultierenden negativen Effekte zu kompensieren und die Konsistenz der Mustererkennung zu steigern.
In Fig.7a und b sind die dafür entwickelten Funktionen zusammenfassend dargestellt.
Im wesentlichen überprüfen diese Funktionen, ob ein Merkmal überhaupt aufgetreten ist, oder ob Merkmale eines Pfades zusammengefasst werden sollten.
Insgesamt ist die entwickelte Mustererkennung auf Grund dieser Konsistenzüberprüfungen und durch die sequentielle Abfolge von Bewertungen und Entscheidungen, die eine Akkumulation von Fehlern verhindert, sehr robust.

Positionskorrektur durch Mustervergleich (Fig.6)

Das im obigen beschriebene Verfahren zur Ermittlung eines Kartenpfades kann des weiteren benutzt werden zu Korrektur einer Kartenposition eines Kraftfahrzeugs.
In Fig.6 ist eine Vorgehensweise bei der Korrektur der Kartenposition schematisch dargestellt.
Generell sind Unterschiede in den Längenmerkmalen von Sensorpfad und Karte für eine Kalibrierung der Odometersensorik nutzbar. Insbesondere wenn die digitale Karte genauer ist als die bisher genutzte Kalibrierung.
Darüber hinaus ist es möglich, die durch die Mustererkennung verfügbar gemachten Informationen für eine Überprüfung und Korrektur der absoluten Position des Kraftfahrzeugs nach einer Kurve zu nutzen. Dazu werden die in den Zustandsmaschinen ermittelten Längen nach einer Kurve verglichen.
Dieser Vergleich ist nur dann eindeutig, wenn es nur eine Kartenalternative gibt, die sich im Zustand "FEATURE" befindet, d.h. die mit dem Sensormuster übereinstimmt. Nur in diesem Fall wird von der Mustererkennung über die Funktion vpat_length_correction() (Fig.7a und b) eine Korrekturgröße für die absolute Position geliefert, die sich aus mehreren Größen zusammensetzen kann (siehe Gleichungen 8 bis 11 und Fig.6).
$\Delta Pos_{init}$ wird immer genutzt und ergibt sich aus der Differenz der Längen von Sensor- ($\hat{L}_{sens}$) und Kartenpfad ($\hat{L}_{map}$) nach der zuletzt beendeten Kurve. Hierbei wird die geschätzte Kurvenmitte, d.h. der Mittelpunkt zwischen Kurvenbeginn und Kurvenende, zu Grunde gelegt.
$\Delta Pos_{sing}$ kompensiert Ungenauigkeiten in der Karte, falls die gerade beendete Kurve in der Karte singulär ist (siehe Abbildung 6).
Durch $\Delta Pos_{lane}$ wird berücksichtigt, dass in der Karte meist nur die Straßenmitte, nicht aber jede Fahrbahn erfasst ist (siehe Abbildung 7). Zugleich wird zwischen Rechtsverkehr (Minus-Zeichen in Glg. 10) und Linksverkehr (Plus-Zeichen in Glg. 10) unterschieden.
Die endgültige Korrekturgröße $\Delta Pos_{final}$ ergibt sich schließlich aus der Summe der genutzten Korrekturgrößen $\Delta Pos_{used}$, unter Berücksichtigung einer Toleranz von einer Fahrbahnbreite (FB).

$$\Delta Pos_{init} = \hat{L}_{sens} - \hat{L}_{map} \quad\quad (8)$$

$$\Delta Pos_{sing} = \hat{L}_{sens} \cdot \frac{4 - \pi}{\pi} \quad \text{falls} \quad 45^O < \varphi_{sens} < 135^O \quad\quad (9)$$

$$\Delta \text{Pos}_{lane} = \mp FB \cdot \tan(\varphi_{sens} / 2)$$

$$\text{falls } \varphi_{sens} < 135° \qquad\qquad (10)$$

$$\Delta \text{Pos}_{final} = \begin{cases} 0 & \text{falls } \sum \Delta \text{Pos}_{used} \leq FB \\ \sum \Delta \text{Pos}_{used} - FB & \text{falls } \sum \Delta \text{Pos}_{used} > FB \end{cases} \qquad (11)$$

Es ist darauf hinzuweisen, dass ein Einsatz des Navigationssystem nicht auf ein Kraftfahrzeug beschränkt ist, sondern dass das Navigationssystem mit einer entsprechenden Anpassung auch für ein beliebiges anderes mobiles aber auch nicht mobiles System, beispielsweise ein maritimes Fahrzeug, ein Flugzeug oder ein Gebäude, eingesetzt werden kann.

Ferner ist darauf hinzuweisen, dass auch andere Positionsermittlungssysteme als solche, welche in dem Ausführungsbeispiel beschrieben sind, für eine Positionsermittlung verwendet werden können.

Eine Verwendung von Positionsermittlungssystemen wie bei dem Ausführungsbeispiel, ein Gyroskop und ein Odometer (erstes Positionsermittlungssystem) sowie ein GPS (zweites Positionsermittlungssystem), hat aber den großen Vorteil, dass damit eine Position eines Kraftfahrzeugs unter Verwendung von voneinander unabhängigen Größen, nämlich die zurückgelegte Strecke des Kraftfahrzeugs sowie die Ausrichtung des Kraftfahrzeugs, beschreibbar ist.

In diesem Dokument wurden folgende Veröffentlichungen zitiert:

[1] Zhao Yilin: "Vehivcle Location and Navigation Systems", Artech House Publishers, S.43-104, S.239-264, 1997, ISBN 0-89006-8621-5.

[2] J. Sauer, U. Krupstedt: "Informatik für Ingenieure", Kapitel 7 (Automaten), Teubner Verlag, Stuttgart, 1985, ISBN 3-519-00103-9.

[3] Zhao Yilin: "Vehivcle Location and Navigation Systems ", Artech House Publishers, S.129-141, 1997, ISBN 0-89006-8621-5.

[4] Zhao Yilin: "Vehivcle Location and Navigation Systems", Artech House Publishers, S.63-75, 1997, ISBN 0-89006-8621-5.

[5] U.S. Patent No. 4,796,191, EP-A1-0 716 289.

**Patentansprüche**

1. Verfahren zur Ermittlung eines einem von einem mobilen System tatsächlich zurückgelegten Fahrweg entsprechenden Kartenfahrwegs in einer Karte durch einen Mustervergleich eines ersten Fahrwegmusters mit einem zweiten Fahrwegmuster,

   - bei dem das mobile System den tatsächlichen Fahrweg zurücklegt, wobei unter Verwendung eines Sensorsystems eine erste Fahrweginformation ermittelt und unter Verwendung der ersten Fahrweginformation das erste Fahrwegmuster ermittelt wird,
   - bei dem für den tatsächlich zurückgelegten Fahrweg unter Verwendung der Karte eine zweite Fahrweginformation ermittelt wird, welche einen dem tatsächlich zurückgelegten Fahrweg möglicherweise entsprechenden Kartenfahrweg in der Karte beschreibt, und unter Verwendung der zweiten Fahrweginformation das zweite Fahrwegmuster ermittelt wird,
   - bei dem das erste Fahrwegmuster mit dem zweiten Fahrwegmuster verglichen wird und bei dem Mustervergleich unter Verwendung eines vorgebbaren Vergleichskriteriums der möglicherweise entsprechende Kartenfahrweg als der dem tatsächlich zurückgelegten Fahrweg entsprechende Kartenfahrweg ermittelt wird.

2. Verfahren nach Anspruch 1,
   bei dem die erste und/oder zweite Fahrweginformation Positionsinformationen bzw. eine Positionsinformation des mobilen Systems sind/ist.

3. Verfahren nach Anspruch 2,
bei dem die Positionsinformation eine Ausrichtung und/oder eine Ausrichtungsänderung und/oder eine Fahrwegstrecke des mobilen Systems beinhaltet.

4. Verfahren nach einem der vorangehenden Ansprüche,
bei dem ein Fahrwegmuster durch mindestens einen Merkmalsvektor umfassend mindestens ein Merkmal "Gerade" oder ein Merkmal "Kurve" beschrieben wird.

5. Verfahren nach Anspruch 4,
bei dem das Fahrwegmuster durch eine Abfolge von Merkmalsvektoren beschrieben wird, welche jeweils mindestens das Merkmal "Gerade" und/oder das Merkmal "Kurve" beinhalten.

6. Verfahren nach einem der Ansprüche 3 bis 5,
bei dem das Merkmal "Gerade" durch eine Streckenlänge, ermittelt unter Verwendung der Fahrwegstrecke, und/oder das Merkmal "Kurve" durch einen Winkel, ermittelt unter Verwendung der Ausrichtungsänderung, beschrieben wird.

7. Verfahren nach einem der vorangehenden Ansprüche,
bei dem das vorgebbare Vergleichskriterium ein Fehlermaß beinhaltet, welches unter Verwendung eines Winkelfehlers und/oder eines Längenfehlers ermittelt wird.

8. Verfahren nach Anspruch 7,
bei dem bei der Ermittlung des Winkelfehlers und/oder des Längenfehlers eine statistischen Wahrscheinlichkeitsverteilung berücksichtigt wird.

9. Verfahren nach Anspruch 7 oder 8,
bei dem bei der Ermittlung des Fehlermaßes der Winkelfehler und/oder der Längenfehler jeweils bewertet und/oder gewichtet werden.

10. Verfahren nach einem der vorangehenden Ansprüche,
bei dem das Vergleichskriterium abhängig von dem tatsächlich zurückgelegten Fahrweg ist.

11. Verfahren nach einem der vorangehenden Ansprüche,
bei dem das Sensorsystem mindestens eines der folgenden Sensorsysteme aufweist: ein Odometer, ein Gyroskop, ein GPS-System.

12. Verfahren nach einem der vorangehenden Ansprüche,
bei dem die Karte eine digitale Karte ist.

13. Verfahren nach einem der vorangehenden Ansprüche,
bei dem das mobile System ein Kraftfahrzeug ist.

14. Verfahren nach einem der vorangehenden Ansprüche,
eingesetzt in einem Navigationssystem, wobei die Karte in dem Navigationssystem gespeichert ist, in welche der ermittelte entsprechende Kartenfahrweg eingezeichnet wird.

15. Verfahren nach einem der vorangehenden Ansprüche,
eingesetzt zu einer Positionskorrektur des mobilen Systems derart, dass die zweite Fahrweginformation unter Verwendung der ersten Fahrweginformation korrigiert wird.

16. Anordnung zur Ermittlung eines einem von einem mobilen System tatsächlich zurückgelegten Fahrweg entsprechenden Kartenfahrwegs in einer Karte mit

- einem Sensorsystem, mit welchem für den von dem mobilen System zurückgelegten tatsächlichen Fahrweg eine erste Fahrweginformation und unter Verwendung der ersten Fahrweginformation ein erstes Fahrwegmuster ermittelbar ist,

- einer Kartenauswerteeinheit, mit welcher für den tatsächlich zurückgelegten Fahrweg unter Verwendung der Karte eine zweite Fahrweginformation ermittelbar ist, welche einen dem tatsächlich zurückgelegten Fahrweg möglicherweise entsprechenden Kartenfahrweg in der Karte beschreibt, und mit welcher unter Verwendung der zweiten Fahrweginformation ein zweites Fahrwegmuster ermittelbar ist,
- einer Mustervergleichseinheit, mit welcher das erste Fahrwegmuster mit dem zweiten Fahrwegmuster vergleichbar ist, wobei bei dem Mustervergleich unter Verwendung eines vorgebbaren Vergleichskriteriums der möglicherweise entsprechende Kartenfahrweg als der dem tatsächlich zurückgelegten Fahrweg entsprechende Kartenfahrweg ermittelbar ist.

**Claims**

1. Method for determining a map route, corresponding to a route actually travelled by a mobile system, in a map by comparing patterns, specifically comparing a first route pattern with a second route pattern,

   - in which the mobile system travels the actual route, a first route information item being determined by using a sensor system, and the first route pattern being determined by using the first route information item,
   - in which the map is used to determine for the actually travelled route a second route information item, which describes a map route in the map possibly corresponding to the actually travelled route, and the second route pattern is determined by using the second route information item, and
   - in which the first route pattern is compared with the second route pattern and during the comparison of patterns a prescribable comparison criterion is used to determine the possibly corresponding map route as the map route corresponding to the actually travelled route.

2. Method according to Claim 1, in which the first and/or second route information item are/is position information and/or a position information item of the mobile system.

3. Method according to Claim 2, in which the position information includes an alignment and/or a change in alignment and/or a route section of the mobile system.

4. Method according to one of the preceding claims, in which a route pattern is described by at least one feature vector comprising at least one feature of "straight" or one feature of "curve".

5. Method according to Claim 4, in which the route pattern is described by a sequence of feature vectors which respectively include at least the feature of "straight" and/or the feature of "curve".

6. Method according to one of Claims 3 to 5, in which the feature of "straight" is described by a section length, determined by using the route section, and/or the feature of "curve" is described by an angle, determined by using the change in alignment.

7. Method according to one of the preceding claims, in which the prescribable comparison criterion includes a measure of error which is determined by using an angle error and/or a length error.

8. Method according to Claim 7, in which a statistical probability distribution is considered when determining the angle error and/or the length error.

9. Method according to Claim 7 or 8, in which the angle error and/or the length error are/is respectively evaluated and/or weighted when determining the measure of error.

10. Method according to one of the preceding claims, in which the comparison criterion is dependent on the actually travelled route.

11. Method according to one of the preceding claims, in which the sensor system has at least one of the following sensor systems: an odometer, a gyroscope, a GPS system.

12. Method according to one of the preceding claims, in which the map is a digital map.

13. Method according to one of the preceding claims, in which the mobile system is a motor vehicle.

**14.** Method according to one of the preceding claims, used in a navigation system, the map being stored in the navigation system, the corresponding map route determined being input into said navigation system.

**15.** Method according to one of the preceding claims, used to correct the position of the mobile system in such a way that the second route information item is corrected by using the first route information item.

**16.** Arrangement for determining a map route, corresponding to a route actually travelled by a mobile system, in a map having

- a sensor system which can be used to determine for the actual route travelled by the mobile system a first route information item and, by using the first route information item, to determine a first route pattern,
- a map evaluation unit which can be used, using the map, to determine for the actually travelled route a second route information item, which describes a map route in the map possibly corresponding to the actually travelled route, and which can be used to determine a second route pattern, by using the second route information item, and
- a pattern comparison unit which can be used to compare the first route pattern with the second route pattern, during the comparison of patterns it being possible to use a prescribable comparison criterion to determine the possibly corresponding map route as the map route corresponding to the actually travelled route.

**Revendications**

**1.** Procédé de détermination d'un trajet sur une carte correspondant à un trajet parcouru réellement par un système mobile, en comparant un premier modèle de trajet à un deuxième modèle de trajet,

- dans lequel le système mobile parcourt le trajet réel, dans lequel on détermine, en utilisant un système de capteur, une première information de trajet et on détermine, en utilisant la première information de trajet, le premier modèle de trajet,
- dans lequel on détermine, pour le trajet parcouru réellement, en utilisant la carte, une deuxième information de trajet, qui décrit un trajet sur la carte correspondant éventuellement au trajet parcouru réellement, et on détermine le deuxième modèle de trajet en utilisant la deuxième information de trajet,
- dans lequel on compare le premier modèle de trajet au deuxième modèle de trajet et dans la comparaison des modèles on détermine, en utilisant un critère de comparaison pouvant être donné à l'avance, le trajet sur la carte correspondant éventuellement comme étant le trajet sur la carte conforme au trajet parcouru réellement.

**2.** Procédé suivant la revendication 1,
dans lequel la première et/ou la deuxième informations de trajet sont/est des informations de position ou une information de position du système mobile.

**3.** Procédé suivant la revendication 2,
dans lequel l'information de position contient une direction et/ou un changement de direction et/ou un tronçon de trajet du système mobile.

**4.** Procédé suivant l'une des revendications précédentes,
dans lequel on décrit un modèle de trajet par au moins un vecteur de caractéristique, comprenant au moins une caractéristique « droit » ou une caractéristique « courbe ».

**5.** Procédé suivant la revendication 4,
dans lequel on décrit le modèle de trajet par une succession de vecteurs de caractéristique, qui contiennent respectivement au moins la caractéristique « droit » et/ou la caractéristique « courbe ».

**6.** Procédé suivant l'une des revendications 3 à 5,
dans lequel on décrit la caractéristique « droit » par une longueur de tronçon déterminée en utilisant le tronçon de trajet et/ou la caractéristique « courbe » par un angle déterminé en utilisant le changement de direction.

**7.** Procédé suivant l'une des revendications précédentes,
dans lequel le critère de comparaison, qui peut être donné à l'avance, contient une mesure d'erreur, qui est déterminée en utilisant une erreur d'angle et/ou une erreur de longueur.

**8.** Procédé suivant la revendication 7,
dans lequel, lors de la détermination de l'erreur d'angle et/ou de l'erreur de longueur, on prend en compte une distribution statistique de probabilité.

**9.** Procédé suivant la revendication 7 ou 8,
dans lequel, lors de la détermination de la mesure de l'erreur, on évalue et/ou on pondère respectivement l'erreur d'angle et/ou l'erreur de longueur.

**10.** Procédé suivant l'une des revendications précédentes,
dans lequel le critère de comparaison dépend du trajet parcouru réellement.

**11.** Procédé suivant l'une des revendications précédentes,
dans lequel le système de capteur a au moins l'un des systèmes de capteurs suivants : un odomètre, un gyroscope, un système GPS.

**12.** Procédé suivant l'une des revendications précédentes,
dans lequel la carte est une carte numérique.

**13.** Procédé suivant l'une des revendications précédentes,
dans lequel le système mobile est un véhicule automobile.

**14.** Procédé suivant l'une des revendications précédentes,
utilisé dans un système de navigation, dans lequel on mémorise la carte dans le système de navigation, carte sur laquelle le trajet conforme qui a été déterminé est dessiné.

**15.** Procédé suivant l'une des revendications précédentes,
utilisé pour une correction de position du système mobile, de manière à ce que la deuxième information de trajet soit corrigée en utilisant la première information de trajet.

**16.** Agencement de détermination d'un trajet sur une carte correspondant à un trajet parcouru réellement par un système mobile, comprenant

- un système de capteur, par lequel il peut être déterminé, pour le trajet réel parcouru par le système mobile, une première information de trajet et, en utilisant la première information de trajet, un premier modèle de trajet,
- une unité d'exploitation de carte, par laquelle il peut être déterminé, pour le trajet parcouru réellement, en utilisant la carte, une deuxième information de trajet, qui décrit, sur la carte, un trajet correspondant éventuellement au trajet parcouru réellement, et par laquelle il peut être déterminé, en utilisant la deuxième information de trajet, un deuxième modèle de trajet,
- une unité de comparaison de modèle, par laquelle le premier modèle de trajet peut être comparé au deuxième modèle de trajet, dans lequel, lors de la comparaison de modèles, le trajet sur la carte correspondant éventuellement peut, en utilisant un critère de comparaison pouvant être donné à l'avance, être déterminé comme étant le trajet sur la carte conforme au trajet parcouru réellement.

# FIG 1

# FIG 3

| 311 | |
| --- | --- |
| Musterermittlung unter Verwendung einer ersten Zustandsmaschine | Sensorische Ermittlung einer ersten Fahrweginformation (Positionsinformation) und Ermittlung eines ersten Fahrwegmusters (Sensorpfad) 310 |
| Musterermittlung unter Verwendung iner zweiten Zustandsmaschine 321 | Ermittlung einer zweiten Fahrweginformation und eines zweiten Fahrwegmusters (möglicher Kartenpfad) 320 |
| | Mustervergleich und Festlegung des Kartenfahrzeugs 330 |

# FIG 2

Extrahierung Fahrwegmuster Mustervergleich —248

210

200

Bestimmung Fahrweg bzw. Sensorpfad —246

247

Bestimmung Kartenpfad

220

GPS-Signal

230

Gyroskop

240

Odometer

Positions-bestimmung

245

digitale Karte

250

Routen-berechnung

270

Eingabevorrichtung —260

Anzeige Sprachausgabe

280

290

292

EP 1 300 652 B1

# FIG 4A

Initialisierung

$|\Delta\varphi| \leq \Delta\varphi_{min} \ \& \ C \leq 1000$

Gerade
$L_G = \Sigma\Delta L$
$\varphi_G = \Sigma\Delta\varphi$

$|\Delta\varphi| > \Delta\varphi_{min} \lor C > 1000$

$|\Delta\varphi| \leq \Delta\varphi_{min} \ \& \ C \leq 1000$

Kurvenbeginn
$L_{KB} = \Sigma\Delta L$
$\varphi_{KB} = \Sigma\Delta\varphi$

$(|\Delta\varphi| > \Delta\varphi_{min} \lor C > 1000)$

$\& \ |\Sigma\Delta\varphi| \leq \varphi_{min}$

$(|\Delta\varphi| > \Delta\varphi_{min} \lor C > 1000)$

$\& \ |\Sigma\Delta\varphi| > \Delta\varphi_{min}$

$|\Delta\varphi| \geq \Delta\varphi_{min} \lor C \geq 1000$

Kurve
$L_K = \Sigma\Delta L$
$\varphi_K = \Sigma\Delta\varphi$

$|\Delta\varphi| < \Delta\varphi_{min} \ \& \ C < 1000$

$|\Delta\varphi| \geq \Delta\varphi_{min} \lor C \geq 1000$

Kurvenende
$L_{KE} = \Sigma\Delta L$
$\varphi_{KE} = \Sigma\Delta\varphi$

$(|\Delta\varphi| < \Delta\varphi_{min} \ \& \ C < 1000)$

$\& \ \Sigma\Delta L \leq L_{min}$

$|\Delta\varphi| < \Delta\varphi_{min} \lor C < 1000$

$\& \ \Sigma L > L_{min}$ | f

mit:
$\Delta\varphi_{min} = 2°$
$\varphi_{min} = 30°$
$L_{min} = 10m$

# FIG 4B

Initialisierung

Gerade
$L_G = \Sigma \Delta L$
$\varphi_G = \Sigma \Delta \varphi$

$(|\Delta \varphi| \leq \Delta \varphi_{min} \, \& \, C \leq 1000)$

$\vee \, (\Delta L \geq L_{min} \, \& \, |\Delta \varphi| \leq \Delta \varphi_{min})$

| $\Delta L > L_{min}$ | f |
|---|---|

| $(|\Delta \varphi| > \Delta \varphi_{min} \vee C > 1000)$ |
|---|
| $\& \, \Delta L \leq L_{min}$ |

| $\Delta L > L_{min} \, \& \, |\Delta \varphi| > \Delta \varphi_{min}$ | f |
|---|---|

Kurve
$L_K = \Sigma \Delta L$
$\varphi_K = \Sigma \Delta \varphi$

| $(|\Delta \varphi| > \Delta \varphi_{min} \vee C > 1000)$ |
|---|
| $\& \, \Delta L \leq L_{min}$ |

| $|\Delta \varphi| \leq \Delta \varphi_{min} \, \& \, C \leq 1000$ |
|---|
| $\& \, \Delta L \leq L_{min}$ |

| $(|\Delta \varphi| > \Delta \varphi_{min} \vee C > 1000)$ |
|---|
| $\& \, \Sigma \Delta L < L_{min}$ |

Kurvenende
$L_{KE} = \Sigma \Delta L$
$\varphi_{KE} = \Sigma \Delta \varphi$

| $\Sigma \Delta L \geq L_{min}$ | f |
|---|---|

| $|\Delta \varphi| < \Delta \varphi_{min} \, \& \, C < 1000$ |
|---|
| $\& \, \Sigma \Delta L < L_{min}$ |

mit:

$\Delta \varphi \, min = 4°$
$\varphi \, min = 30°$
$L \, min = 35m$

# FIG 5

Sensor

erster
möglicher
Kartenpfad

$L_{i,j}$

Startposition

KB

KE

$\Delta\varphi_j$

KE

KB

$\Delta\varphi_j$

zweiter
möglicher
Kartenpfad

# FIG 6

Verhältnis der Streckenlängen
von Karte und Sensor: $V_{KS}=4/\pi$

R

$\varphi_{sens}$

FB

Strecke in der Karte: $SK=2\cdot FB\cdot\tan(\varphi_{sens}/2)$

Strecke in der Fahrbahnmitte: $SF=FB\cdot\tan(\varphi_{sens}/2)$

Gegenrichtung

Fahrtrichtung

# FIG 7A

| Funktionsname | Situation | Wirkung |
|---|---|---|
| vpat_check_hidden_SensFeat | Es gibt ein neues Kartenmerkmal, aber kein neues Sensormerkmal. Der Sensorpfad befindet sich im Zustand "Gerade". | Überprüfung, ob im Zustand "Gerade" eine versteckte Winkeländerung aufgetreten ist. Falls ja, wird diese für den Vergleich der Merkmalspaare genutzt. |
| vpat_check_hidden_MapFeat | Es gibt ein neues Sensormerkmal, aber kein neues Kartenmerkmal. Der Kartenpfad befindet sich im Zustand "Gerade". | Überprüfung, ob im Zustand "Gerade" eine versteckte Winkeländerung aufgetreten ist. Falls ja, wird diese für den Vergleich der Merkmalspaare genutzt. |
| vpat_consistency_correction_map_nosens | Das aktuelle, neue Kartenmerkmal tritt verspätet auf, d.h. das zugehörige Sensormerkmal wurde bereits genutzt. | Korrektur der Pattern Certainty durch Vergleich des alten Sensormerkmals mit dem neuen Kartenmerkmal. |
| vpat_consistency_correction_nomap_sens | Das aktuelle, neue Sensormerkmal tritt verspätet auf, d.h. das zugehörige Kartenmerkmal wurde bereits genutzt. | Korrektur der Pattern Certainty durch Vergleich des alten Kartenmerkmals mit dem neuen Sensormerkmal. |
| vpat_check_twomapfeat | Es liegen zwei neue Kartenmerkmale vor, aber nur ein neues Sensormerkmal. | Überprüfung, ob die beiden Kartenmerkmale vor dem Vergleich mit dem Sensormerkmal zusammengefaßt werden sollten. |
| vpat_check_twosens feat | Es liegen zwei neue Sensormerkmale vor, aber nur ein neues Kartenmerkmal. | Überprüfung, ob das Kartenmerkmal vor dem Vergleich mit den beiden Sensormerkmalen aufgeteilt werden sollte. (Es gibt nur einen Sensorpuffer. Daher können die beiden Sensormerkmale nicht zusammengefaßt werden.) |
| vpat_check_twomap_twosens | Es liegen keine neuen, aber in beiden Pfaden mindestens zwei alte Merkmalspaare vor. | Falls die einzelnen Merkmalspaare schlechter bewertet wurden, als das zusammengefaßte Merkmalspaar bewertet würde, wird die Pattern Certainty entsprechend nach oben korrigiert. Der Bearbeitungsstatus (vgl. Mit Abschnitt 3.1) wird dann auf "PC_WAS_CHECKED" gesetzt. |

EP 1 300 652 B1

# FIG 7B

| Funktionsname | Situation | Wirkung |
|---|---|---|
| vpat_check_significance | Der Vergeich eines Sensor- und eines Kartenmerkmals würde zu einer Abnahme der Pattern Certainty führen. | Falls keines der beiden Merkmale signifikant ist, bleibt die Pattern Certainty unverändert, d.h. die Merkmale werden bewußt ignoriert. |
| vpat_chec_pattern_reset | Es gibt nur eine Possibility, die hoch genug bewertet ist, d.h. es sind mindestens vier Merkmale aufgetreten. | Die Merkmalsvektoren werden zurück gesetzt. Ab diesem Zeitpunkt sind die Merkmalspuffer für Karte und Sensor auf jeden Fall synchron. |
| siehe Vpat_det_action | Es treten kaum Merkmale auf da z.B. eine Autobahnfahrt stattfindet, d.h. große Kurvenradien und nur kleine Winkeländerungen pro Zeitschritt. | Sobald die zurückgelegte Strecke in Karte und Sensor größer als 1km ist (HIGHWAY_STRAIGHT), wird die Pattern Certainty erhöht und entweder ein Merkmal mit dieser Länge und dem Winkel Null ausgegeben oder der Bearbeitungsstatus auf "LENGHT_CHECK" gesetzt. Falls die Winkeländerung im Zustand "Gerade" größer als 60° ist (HIGHWAY_ANGLE), wird ebenfalls die Pattern Certainty erhöht und entweder ein Merkmal mit dieser Winkeländerund und der Distanz Null ausgegeben der Bearbeitungsstatus auf "ANGLE_CHECK" gesetzt. |
| siehe vpat_eval_pm | Keine der Kartenalternativen ist im Zustand "FEATURE" oder im Zustand "UNKNOWN_FEATURE". Falls eine Karten alternative im Zustand "WAIT" ist, hat sie eine Pattern Certainty kleiner Als 2*PAT_CERT_MIN. | Jede Kartenalternative ist entweder im Zustand "NOT_FEATURE" oder sie ist im Zustand "WAIT" mit sehr kleiner Pattern Certainty. Daher wird die Mustererkennung zurückgesetzt. |

EP 1 300 652 B1

EP 1 300 652 B1

FIG 8

23

# FIG 9

Winkelbewertung mittels einer Gaußverteilung

$$\Delta PC_W = 250 \cdot \left(2 \cdot e - \left(\frac{\Delta\varphi}{\sigma_W}\right)^2 - 1\right)$$

$$\alpha_1 = \begin{cases} e^{-\left(\frac{|\Delta L| - L_{err,abs}}{L_{err,abs}}\right)^2} & \text{fall } |\Delta L| > L_{err,abs} \ \& \ \Delta PC_W > 0 \\ 1 & \text{fall } |\Delta L| \leq L_{err,abs} \ \vee \ \Delta PC_W \leq 0 \end{cases}$$

$$PC = \Delta PC_W \cdot \alpha_1$$

Bewertung von Merkmalspaaren. Links: $\Delta PC_W$ in Abhängigkeit von $\Delta\varphi$ für $\sigma_W = 30°$ und für $\sigma_W = 60°$ (gestrichelt). Rechts $\alpha_1$ in Abhängigkeit von $\Delta L$ für $L_{err,abs} = 20m$.

EP 1 300 652 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 4796191 A

- EP 0716289 A1

**In der Beschreibung aufgeführte Nicht-Patentliteratur**

- **ZHAO YILIN.** Vehivcle Location and Navigation Systems. Artech House Publishers, 1997, 43-104239-264
- **J. SAUER ; U. KRUPSTEDT.** Informatik für Ingenieure. *Informatik für Ingenieure,* 1985

- **ZHAO YILIN.** Vehivcle Location and Navigation Systems. 1997, 129-141
- **ZHAO YILIN.** Vehivcle Location and Navigation Systems. Artech House Publishers, 1997, 63-75